# EUROPEAN PATENT APPLICATION

(11) **EP 2 197 208 A1**
(43) Date of publication of application: **16.06.2010**
(21) Application number: 07845949.2
(22) Date of filing: 14.12.2007
(51) Int. Cl.: H04N 7/173

(54) **A DISTRIBUTING METHOD FOR A FILE CONTENT OF AN INTERACTIVE NETWORK TELEVISION SYSTEM**

(30) Priority: 21.09.2007 CN 200710151654
(71) Applicant: ZTE Corporation, Shenzhen, Guangdong 518057 (CN)
(72) Inventor: XIA, Hongfei, Guangdong 518057 (CN); HU, Jie, Guangdong 518057 (CN); WANG, Dong, Guangdong 518057 (CN)
(74) Representative: Hendriksen, David
(86) International application number: PCT/CN2007/003616
(87) International publication number: WO 2009/036625

(57) **Abstract**

The present invention discloses a distributing method for a file content of an interactive network television system, including the following steps: a content preparation function module transmitting a distributing request of a file content to a content distribution and position control function module; the content distribution and position control function module producing a distributing task based on a distributing strategy after it receives the distributing request of the content preparation function module; after selecting the content delivery and storage function module, the content distribution and position control function module forwarding the file content distributing request from the content preparation function module to the content delivery and storage function module; and based on the response of the content delivery and storage function module transmitted by the content distribution and position control function module, the content preparation function module transmits the file content to the content delivery and storage function module. The respective parts of the interactive network television system, enhanced by the present invention, become less costly, more reliable and more expansible, and thus the core competence of the IPTV system is improved.

## Description

### Field of the Invention

The present invention relates to an interactive network television system, and specifically, to a technology for distributing a file content of an interactive network television system.

### Background of the Invention

With the deep going development of the interactive network television system (also referred to as IPTV system) technology and the increasing number of users, it is highly required to have a system with better performance and reliability, and especially, for the content delivery function of an interactive network, the clarity of functions and responsibilities of its internal modules, and the functional interaction of the interactive network with other systems are very important research topics. It becomes very important to make the main responsibilities of respective functions as clear as possible and to reduce interaction between respective parts in the system to obtain better user experience, and thus it is highly required to have a simple and reliable content distribution and service flow.

As the IPTV technology is still under development currently, formulation of international and domestic standards are still in the starting phase, and for the IPTV products from different companies, the responsibilities of various subsystems (mainly including an IPTV terminal function, an IPTV application function, a content distributing function, a managing function, and etc.) in the IPTV system and the definition of the logic relationship between their interfaces are not clear. Whether to be based on an NGN architecture, an NGN IMS architecture or a non NGN architecture, and how to realize interactive network television services under above architectures is a hot research topic of various large standardization organizations, and no conclusion has been made yet. For example, under the IMS architecture, by far there is still no any satisfactory solution on how to support complex video services such as the interactive network television; further, regarding the content delivery function in the interactive network television which is considered as a very important difference from many services, since it has to complete large number of files or live broadcast provided by many service providers, and distribution and storage of the content of a time-shift stream and video services for a terminal, it is also a very important problem to consider how to improve the performance of the interactive network television system based on the reasonable orientation of the function and its interaction with other functions.

Therefore, how to design a highly efficient content delivery system and complete the distribution of the content based on a file and a stream, and to try to reduce the interaction between various functions becomes a very important topic among the problems of the interactive network television system.

### Summary of the Invention

The present invention is made in view of the above problems, and the present invention mainly aims at providing a method for distributing a file content of an interactive network television system.

The method for distributing a file content of an interactive network television system according to the present invention is used in a situation in which a content provider has transmitted a content to a content preparation function module, and the method includes the following steps: S102, the content preparation function module transmitting a distributing request of a file content to a content distribution and position control function module; S104, the content distribution and position control function module producing a distributing task based on a distributing strategy after it receives the distributing request of the content preparation function module; S106, after selecting a content delivery and storage function module, the content distribution and position control function module forwarding the file content distributing request from the content preparation function module to the content delivery and storage function module; and S108, based on the response of the content delivery and storage function module transmitted by the content distribution and position control function module, the content preparation function module transmitting the file content to the content delivery and storage function module.

In addition, in the step S 102 of the method, before transmitting the file content distributing request to the content distribution and position control function module, the content preparation function module completes preparation prior to distributing the file content to the content distribution and position control function module. That the content preparation function module completes the preparation prior to distributing the file content to the content distribution and position control function module includes at least one of the following steps: aggregating the content of the file content; managing the content of the file content; coding the content of the file content; and encrypting the file content.

In addition, in the step S108 of the method, the content preparation function module transmits the file content to the content delivery and storage function module, and after transmitting the file content is completed, the method further includes S110, i.e., distribution is performed periodically among different content delivery and storage function modules, which includes the following steps: the content distribution and position control function module periodically acquiring file content distribution information in a content delivery and storage function server, wherein, the content distribution information includes a load state and file distribution information; feeding back the file content distribution information in the content delivery and storage function module to the content distribution and position control function module; the content distribution and position control function module processing the distributing task of a content among different servers of the content delivery and storage function module based on the file content produced by the distributing strategy, wherein, the distributing strategy is formulated based on at least one of the following information: the feedback of file content distribution information in the server of the content delivery and storage function module, and the feedback of file content position information in the server of the content delivery and storage function module; the content distribution and position control function module transmitting the file content distributing request to the content delivery and storage function module; and distributing the file content in the server of the content delivery and storage function module to the servers of other content delivery and storage function modules.

In addition, in the step S104 of the method, the distributing strategy may be based on one or more of the following manners: performing distribution based on a distributing path of a preconfigured designated area; performing distribution based on automatically gathered statistics of the requesting rate of the content according to the use of the content by users; and performing distribution based on using a intelligent distribution strategy to dynamically and automatically maintain the distribution of the content in a network according to the load of the content delivery and storage function module.

In addition, in this method, after receiving the file distributing request of the content distribution and position control function module, the content delivery and storage function module returns a confirmation message of selecting the file content distribution to the content preparation function module.

In addition, in the method, the confirmation message is realized by one of the following manners: manner 1, the content delivery and storage function module directly returns the confirmation message of selecting the file content distribution to the content preparation function module; and manner 2, the content delivery and storage function module responds the confirmation message of selecting the file content to the content distribution and position control function module, and the content distribution and position control function module forwards to the content preparation function module information of the server for storing the file content in the content delivery and storage function returned by the content delivery and storage function module.

In addition, in the method, after selecting the server preparing to store the file content, the content delivery and storage function module returns the confirmation message of selecting the file content distribution to the content preparation function module, wherein, the confirmation message carries position information of a media server which can store the file content, and wherein, the position information includes an IP address and a port information of the server in the content delivery and storage function module preparing to receive the file content.

In addition, in the method, the content preparation function module transmits the content to the content delivery and storage function module in a way that the content delivery and storage function module actively acquires the content from the content preparation function module, or the content delivery and storage function module passively receives the content pushed by the content preparation function module.

In addition, in the method, the step of using the manner that the content delivery and storage function module actively acquires the content includes: the content preparation function module sends transmission parameters to the content delivery and storage function module which thus can establish a connection, wherein, the parameters can include the IP address and the port information; the content delivery and storage function module is connected to the content preparation function module via the transmission parameters to request the content, wherein, the requesting manner can be based on the manner of downloading a FTP file; the content preparation function module transmits the content to the content delivery and storage function module after receiving the request; the content delivery and storage function module stores the content; the content delivery and storage function module confirms the storage of a content file with the content preparation function module; the content delivery and storage function module notifies the content distribution and position control function module; the content distribution and position control function module returns a confirmation message to the content delivery and storage function module; the content distribution and position control function module notifies the content preparation function module; and the content preparation function module returns a confirmation message to the content distribution and position control function module.

In addition, in the method, the step of using the manner that the content delivery and storage function module passively receives the file content of the content preparation function module includes: the content preparation function module actively pushes the content to a server receiving and storing a file in the selected content delivery and storage function module, and the requesting manner can be based on the manner of uploading a FTP file; the content delivery and storage function module stores the content; the content delivery and storage function module confirms the storage of a content file with the content preparation function module; the content preparation function module notifies the content distribution and position control function module; the content distribution and position control function module returns a confirmation message to the content preparation function module; the content distribution and position control function module notifies the content delivery and storage function module; and the content delivery and storage function module returns the confirmation message to the content distribution and position control function module.

Through the above aspects of the present invention, the method for distributing a file content of an interactive network television system according to the present invention is clear and simple in flow, and is simultaneously compatible with current IPTV systems based on the IMS architecture, the NGN architecture and the non NGN architecture. The responsibilities of respective subsystems in the system are very clear, and the flow is excellent in expansibility; and the respective parts of the interactive network television system, enhanced by the present invention, become less costly, more reliable and more expansible, and thus the core competence of the IPTV system is improved.

Other features and advantages of the present invention will be detailed in the following text of the description and will partially become obvious from the description, or can be understood by implementing the present invention. The object and other advantages of the present invention can be achieved and obtained through the description, the claims and the specifically indicated structures in the accompanying drawings.

### Brief Description of the Accompanying Drawings

The accompanying drawings herein are used to provide a further understanding of the present invention and constitute a part of the present application. The accompanying drawings are used to explain the present invention together with the embodiment of the present invention and shall not be construed as limitations on the same. In the accompanying drawings:
Figure 1 illustrates the flow of the method for distributing a file content of an interactive network television system according to the embodiment of the present invention;
Figure 2 illustrates the general flow of the distribution of a file content of an interactive network television system according to the embodiment of the present invention;
Figure 3 illustrates an optional flow of a PULL distributing manner according to the embodiment of the present invention; and
Figure 4 illustrates an optional flow of a PUSH distributing manner according to the embodiment of the present invention.

### Detailed Description of the Invention

Preferable embodiments of the present invention will be described hereinafter in conjunction with the accompanying drawings, and it shall be understood that the preferable embodiments herein are just used to describe and explain the present invention and shall not be construed as limitations on the present invention.

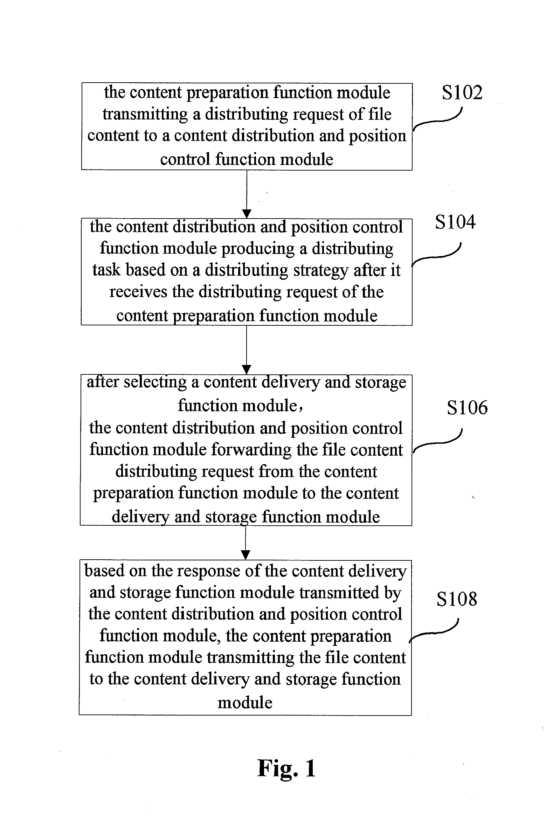

Figure 1 illustrates the flow of the method for distributing a file content of an interactive network television system according to the embodiment of the present invention.

As shown in figure 1, the method is used in a situation in which a content provider has transmitted a content to a content preparation function module, including the following steps: S102, the content preparation function module transmitting a distributing request of a file content to a content distribution and position control function module; S104, the content distribution and position control function module producing a distributing task based on a distributing strategy after it receives the distributing request of the content preparation function module; S106, after selecting a content delivery and storage function module, the content distribution and position control function module forwarding the file content distributing request of the content preparation function module to the content delivery and storage function module; and S108, based on the response of the content delivery and storage function module transmitted by the content distribution and position control function module, the content preparation function module transmitting the file content to the content delivery and storage function module.

In addition, in the step S102 of the method, before transmitting the file content distributing request to the content distribution and position control function module, the content preparation function module completes preparation prior to distributing the file content to the content distribution and position control function module. That the content preparation function module completes the preparation prior to distributing the file content to the content distribution and position control function module includes at least one of the following steps: aggregating the content of the file content; managing the content of the file content; coding the content of the file content; and encrypting the file content.

In addition, in the step S108 of the method, the content preparation function module transmits the file content to the content delivery and storage function module, and after transmitting the file content is completed, the method further includes S110, i.e., distribution is performed periodically among different content delivery and storage function modules, which includes the following steps: the content distribution and position control function module periodically acquiring file content distribution information in a content delivery and storage function server, wherein, the content distribution information includes a load state and file distribution information; feeding back the file content distribution information in the content delivery and storage function module to the content distribution and position control function module; the content distribution and position control function module processing the distributing task of a content among different servers of the content delivery and storage function module based on the file content produced by the distributing strategy, wherein, the distributing strategy is formulated based on at least one of the following information: the feedback of file content distribution information in the server of the content delivery and storage function module, and the feedback of file content position information in the server of the content delivery and storage function module; the content distribution and position control function module transmitting the file content distributing request to the content delivery and storage function module; and distributing the file content in the server of the content delivery and storage function module to the servers of other content delivery and storage function modules.

In addition, in the step S104 of the method, the distributing strategy may be based on one or more of the following manners: performing distribution based on a distributing path of a preconfigured designated area; performing distribution based on automatically gathered statistics of the requesting rate of the content according to the use of the content by users; and performing distribution based on using a intelligent distribution strategy to dynamically and automatically maintain the distribution of the content in a network according to the load of the content delivery and storage function module.

In addition, in this method, after receiving the file distributing request of the content distribution and position control function module, the content delivery and storage function module returns a confirmation message of selecting the file content distribution to the content preparation function module.

In addition, in the method, the confirmation message is realized by one of the following manners: manner 1, the content delivery and storage function module directly returns the confirmation message of selecting the file content distribution to the content preparation function module; and manner 2, the content delivery and storage function module responds the confirmation message of selecting the file content to the content distribution and position control function module, and the content distribution and position control function module forwards to the content preparation function module information of the server for storing the file content in the content delivery and storage function returned by the content delivery and storage function module.

In addition, in the method, after selecting the server preparing to store the file content, the content delivery and storage function module returns the confirmation message of selecting the file content distribution to the content preparation function module, wherein, the confirmation message carries position information of a media server which can store the file content, and wherein, the position information includes an IP address and a port information of the server in the content delivery and storage function module preparing to receive the file content.

In addition, in the method, the content preparation function module transmits the content to the content delivery and storage function module in a way that the content delivery and storage function module actively acquires the content from the content preparation function module, or in a way that the content delivery and storage function module passively receives the file content pushed by the content preparation function module.

In addition, in the method, the step of using the manner that the content delivery and storage function module actively acquires the content includes: the content preparation function module sends transmission parameters to the content delivery and storage function module which thus can establish a connection, wherein, the parameters can include the IP address and the port information; the content delivery and storage function module connects to the content preparation function module via the transmission parameters to request the content, wherein, the requesting manner can be based on the manner of downloading a FTP file; the content preparation function module transmits the content to the content delivery and storage function module after receiving the request; the content delivery and storage function module stores the content; the content delivery and storage function module confirms the storage of a content file with the content preparation function module; the content delivery and storage function module notifies the content distribution and position control function module; the content distribution and position control function module returns a confirmation message to the content delivery and storage function module; the content distribution and position control function module notifies the content preparation function module; and the content preparation function module returns a confirmation message to the content distribution and position control function module.

In addition, in the method, the step of using the manner that the content delivery and storage function module passively receives the file content of the content preparation function module includes: the content preparation function module actively pushes the content to a server receiving and storing a file in the selected content delivery and storage function module , and the requesting manner can be based on the manner of uploading a FTP file; the content delivery and storage function module stores the content; the content delivery and storage function module confirms the storage of a content file with the content preparation function module; the content preparation function module notifies the content distribution and position control function module; the content distribution and position control function module returns a confirmation message to the content preparation function module; the content distribution and position control function module notifies the content delivery and storage function module; and the content delivery and storage function module returns the confirmation message to the content distribution and position control function module.

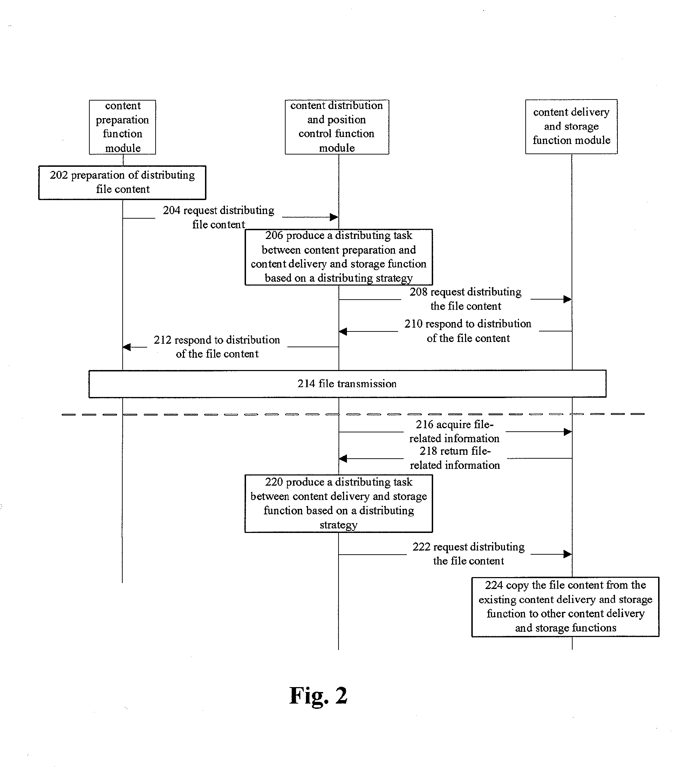

Figure 2 illustrates the general flow of the distribution of a file content of an interactive network television system according to the embodiment of the present invention, which includes the following function modules:
a content preparation function module: a module for performing the functions such as content aggregation, content management, metadata processing and content encryption for the content (including the content provided by a third party system other than the IPTV system) and metadata provided by a content provider. The functions can be used to convert the content provided by the content provider into a known format that needs to be transmitted to an IPTV terminal. The general principle of the function module is described as follows: first, the content provided by the content provider is acquired by the content aggregation function in the content preparation function; the metadata and authentication information are transmitted to the metadata processing function, and the content will be coded and encrypted again using the functions of content processing and content encryption before being transmitted to a content delivery function;
a content distribution and position control function module: controlling the functions of content distribution and content storage to optimize content distribution and select and transmit a content to a terminal user. The module mainly includes two functions: a distribution control Function and a location function. The distribution control function mainly optimizes a content distributing strategy, which manages the distribution information of the content delivery and storage function module. The Location Function is used to identify the best position information for the content delivery and storage function module delivering the content to a media client terminal. Its selecting criteria mainly include the distribution information, the terminal information (for example, information such as the position and the capability of the terminal) and the load state of the content delivery and storage function.
a content delivery and storage function module: completing the functions of distributing, caching and storing the content and transmitting the same to a terminal user. The function can process a media control message, for example, pause and fast forward, to control the media stream of the IPTV system. The function mainly includes a delivery function (unicast and multicast delivery manners), a cache and storage function and a distribution function. The delivery function mainly transmits a content stream to be delivered to a media client terminal. A function of downloading and uploading a file from the media client terminal can also be provided. The cache and storage function is mainly in charge of caching a time-shift live broadcast stream and storing the file content. The distribution function is mainly in charge of distributing a live broadcast stream and the file content inside the content delivery and storage function module, and can also receive the content of the content preparation function.

As shown in figure 2, including the following steps:
The pre-condition of the steps is that a content provider has transmitted file content to the content preparation functions.

S202, the content preparation function module completes the preparations such as content aggregation, content coding, content management and encrypting processing of the file prior to transmitting the content to the content distribution and position control function.

S204, the content preparation function module transmits a file content distributing request to the content distribution and position control function module.

S206, the content distribution and position control function module produces a distributing task based on a distributing strategy after it receives the file distributing request from the content preparation function module, which aims at selecting a relatively optimal content delivery and storage function module and distributing the file content to this module. The distributing strategy may be based on one or more of the following manners: performing distribution based on a distributing path of a preconfigured designated area; performing distribution based on automatically gathered statistics of the requesting rate of the content according to the use of the content by users during the operation; performing distribution using an intelligent distribution strategy to dynamically and automatically maintain the distribution of the content in the network according to the load of the content delivery and storage function module.

S208, after selecting a content delivery and storage function module, the content distribution and position control function module forwards the file content distributing request from the content preparation function to the content delivery and storage function module,.

S210, the content delivery and storage function module returns a file content selection confirmation message to the content distribution and position control function module. The message can carry position information of a media server which can store the file content.

S212, the content delivery and storage control function module transmits to the content preparation function module the information of the media server storing the file content, which is acquired by the content delivery and storage function module.
S214, the content preparation function module establishes a connection with a server in the content delivery and storage function module that can store the file content (the server can assign enough resources to store the file), and performs the content transmission.

S216, the content distribution and position control function periodically acquires relevant information in the content delivery and storage function server, such as the load state and the file distribution information.

S218, the file content distribution information in the server of the content delivery and storage function module is fed back to the content distribution and position control function module.

S220, the content distribution and position control function module processes the distributing task of the content among different servers of the content delivery and storage function module based on the file content produced by the distributing strategy. The distributing strategy can be the file content distribution information in the servers of the content delivery and storage function module or the feedback of the position information, and the distributing strategy can also be considered by synthesizing various factors.

S222, requesting to distribute the file.

S224, the file content in the server of a content delivery and storage function module is distributed to the servers of other content delivery and storage function modules.

Steps 216-224 are repeated periodically, and are usually performed when the load of the server of the content delivery and storage function module is relatively low.

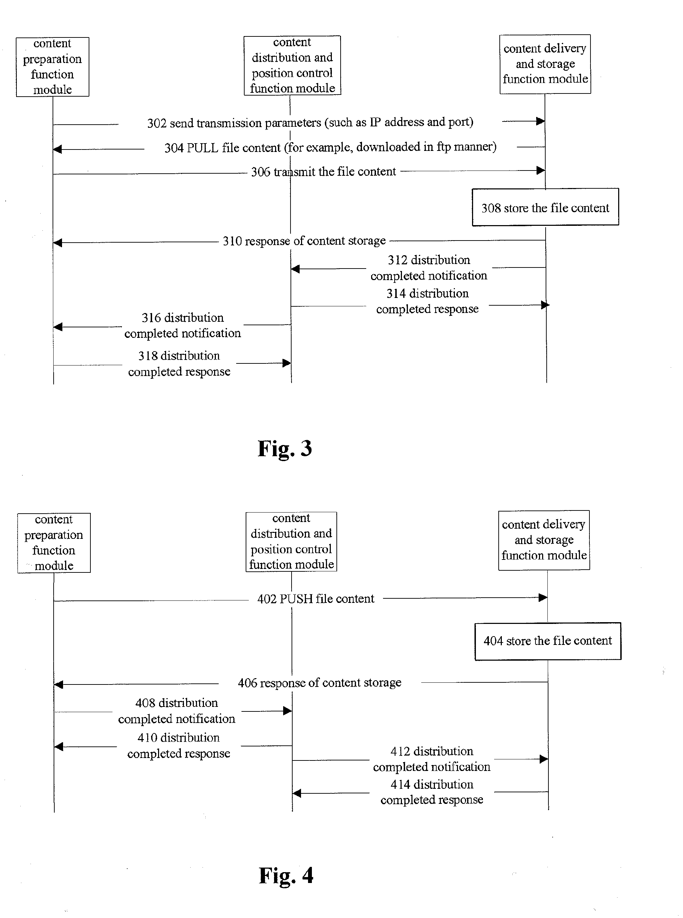

In the present invention, the file content may be transmitted in a manner that the server in the content delivery and storage function module actively requests the file content from the content preparation function module (referred to as a PULL manner), which is shown by the PULL distributing flow in figure 3, or in a manner that the content preparation function module actively pushes the content to the server of the content delivery and storage function module (referred to as a PUSH manner), which is shown by the PUSH distributing flow in figure 4.

Figure 3 illustrates an optional flow of a PULL distributing manner according to the embodiment of the present invention.

As shown in figure 3, step 214 in figure 2 is replaced with the following steps:

S302, the content preparation function module transmits the information, such as the IP address and the port corresponding to the file content to be transmitted by the content preparation function module, to a server ready for receiving and storing the file in the content delivery and storage function module .

S304, the server ready for receiving and storing the file in the content delivery and storage function module requests a connection to a corresponding content (usually downloaded in a ftp manner) in the content preparation function module.

S306, the content preparation module transmits the stream of the file content to the server for receiving and storing the file in the content delivery and storage function module.

S308, the server for receiving and storing the file in the content delivery and storage function module stores the stream of the file content transmitted from the content preparation function module.

S310, the content delivery and storage function module confirms a response of the file content storage with the content preparation function module.

S312, the server for receiving and storing the file in the content delivery and storage function module notifies the content distribution and position control function module that transmission of the file content has been completed, after it has PULLed the content.

S314, after receiving the notification, the content distribution and position control function module confirms that it has received the message that transmission of the file content has been completed from the content delivery and storage function module.

S316, the content distribution and position control function module forwards to the content preparation function module the message that the server in the content delivery and storage function module has completed storing the file content.

S318, the content preparation function module confirms with the content distribution and position control function module that it has received the message that the server in the content delivery and storage function module has completed storing the file content, and then the flow ends.

Figure 4 illustrates an optional flow of a PUSH distributing manner according to the embodiment of the present invention.

As shown in figure 4, in the PUSH manner, step 214 in figure 2 is replaced with the following steps:

S402, the content preparation function module pushes the file content (usually uploaded in a ftp manner, step 210 and step 212 in figure 2 carry the information such as the IP address and the port of a server ready for receiving and storing the file in the content delivery and storage function module) downwards to the server ready for receiving and storing the file in the content delivery and storage function module (i.e. the PUSH manner).

S404, the server for receiving and storing the file in the content delivery and storage function module stores the stream of the file content transmitted from the content preparation function module.

S406, the server for receiving and storing the file in the content delivery and storage function module notifies the content preparation function module that the transmission of the file content has been completed, after it has PUSHed the content.

S408, the content preparation function module transmits to the content distribution and position control function the notification that the file content has been PUSHed.

S410, the content distribution and position control function module confirms with the content preparation function module that it has received the message that the server in the content delivery and storage function module has completed storing the file content.

S412, after receiving the notification, the content distribution and position control function module confirms with the server in the content delivery and storage function module that it has received the message that the transmission of the file content of the content delivery and storage function module has been completed.

S414, the content delivery and control function module confirms with the content distribution and position control function module that it has received the message that the transmission of the file content has been completed, and then the flow ends.
To conclude, the method for distributing a file content of an interactive network television system according to the present invention is clear and simple in flow, and is simultaneously compatible with current IPTV systems based on the IMS architecture, the NGN architecture and the non NGN architecture. The responsibilities of respective subsystems in the system are very clear, and the flow is excellent in expansibility; and the respective parts of the interactive network television system, enhanced by the present invention, become less costly, more reliable and more expansible, and thus the core competence of the IPTV system is improved.

The descriptions above are only preferable embodiments of the present invention, which is not used to restrict the present invention. For those skilled in the art, the present invention may have various changes and variations. Any modifications, equivalent substitutions, improvements etc. within the spirit and principle of the present invention shall all be included in the scope of protection of the present invention.

## Claims

1. A method for distributing a file content of an interactive network television system, used in a situation in which a content provider has transmitted a content to a content preparation function module, **characterized by**, comprising the following steps:
step S102, the content preparation function module transmitting a file content distributing request to a content distribution and position control function module;
step S104, the content distribution and position control function module producing a distributing task based on a distributing strategy after it receives the distributing request from the content preparation function module;
step S106, after selecting a content delivery and storage function module, the content distribution and position control function module forwarding the file content distributing request from the content preparation function module to the content delivery and storage function module; and
step S108, based on a response of the content delivery and storage function module transmitted by the content distribution and position control function module, the content preparation function module transmitting the file content to the content delivery and storage function module.

2. The method according to claim 1, **characterized in that** in step S102, before transmitting the file content distributing request to the content distribution and position control function module, the content preparation function module completes preparation prior to distributing the file content to the content distribution and position control function module, wherein, that the content preparation function module completes the preparation prior to distributing the file content to the content distribution and position control function module includes at least one of the following steps:
aggregating the content of the file content;
managing the content of the file content;
coding the content of the file content; and
encrypting the file content.

3. The method according to any of claims 1-2, **characterized in that** in step S108, the content preparation function module transmits the file content to the content delivery and storage function module, and after the transmitting of the file content is completed, the method further comprises step S110, distributing periodically among different content delivery and storage function modules, the step of distributing periodically among different content delivery and storage function modules includes:
the content distribution and position control function module periodically acquiring file content distribution information in the content delivery and storage function server, wherein, the content distribution information includes a load state and file distribution information;
feeding back the file content distribution information in the content delivery and storage function module to the content distribution and position control function module;
the content distribution and position control function module processing the distributing task of a content among different servers of the content delivery and storage function module based on the file content produced by the distributing strategy, wherein, the distributing strategy is formulated based on at least one of the following information: the feedback of file content distribution information in the server of the content delivery and storage function module, and the feedback of file content position information in the server of the content delivery and storage function module;
the content distribution and position control function module transmitting the file content distributing request to the content delivery and storage function module; and
distributing the file content in the server of the content delivery and storage function module to the servers of other content delivery and storage function modules.

4. The method according to any of claims 1-2, **characterized in that** in step S104, the distributing strategy may be based on one or more of the following manners:
performing distribution based on a distributing path of a preconfigured designated area;
performing distribution based on automatically gathered statistics of the requesting rate of the content according to the use of the content by users; and
performing distribution using an intelligent distributing strategy to dynamically and automatically maintain the distribution of the content in a network according to the load of the content delivery and storage function module.

5. The method according to any of claims 1-2, **characterized in that** after receiving the file distributing request of the content distribution and position control function module, the content delivery and storage function module returns a confirmation message of selecting the file content distribution to the content preparation function module.

6. The method according to claim 5, **characterized in that** the confirmation message is realized by one of the following manners:
manner 1, the content delivery and storage function module directly returns the confirmation message of selecting the file content distribution to the content preparation function module; and
manner 2, the content delivery and storage function module responds the confirmation message of selecting the file content to the content distribution and position control function module, and the content distribution and position control function module forwards to the content preparation function module information of the server for storing the file content in the content delivery and storage function returned by the content delivery and storage function module.

7. The method according to claim 5, **characterized in that** after selecting a server ready for storing the file content, the content delivery and storage function module returns the confirmation message of selecting the file content distribution to the content preparation function module, wherein, the confirmation message carries position information of a media server which can store the file content, and wherein, the position information includes an IP address and a port information of the server ready for receiving the file content in the content delivery and storage function module.

8. The method according to any of claims 1-2, **characterized in that** the content preparation function module transmits the content to the content delivery and storage function module in a way that the content delivery and storage function module actively acquires the content from the content preparation function module, or the content delivery and storage function module passively receives the file content pushed by the content preparation function module.

9. The method according to claim 8, **characterized in that** the step of using the manner that the content delivery and storage function module actively acquires the content includes:
the content preparation function module sends transmission parameters to the content delivery and storage function module so that it can establish a connection, wherein, the parameters can include the IP address and the port information;
the content delivery and storage function module is connected to the content preparation function module via the transmission parameters to request the content, wherein, the requesting manner can be based on the manner of downloading a FTP file;
the content preparation function module transmits the content to the content delivery and storage function module after receiving the request;
the content delivery and storage function module stores the content;
the content delivery and storage function module confirms the storage of the content file with the content preparation function module;
the content delivery and storage function module notifies the content distribution and position control function module;
the content distribution and position control function module returns a confirmation message to the content delivery and storage function module;
the content distribution and position control function module notifies the content preparation function module; and
the content preparation function module returns the confirmation message to the content distribution and position control function module.

10. The method according to claim 8, **characterized in that** the step of using the manner that the content delivery and storage function module passively receives the file content of the content preparation function module includes:
the content preparation function module actively pushes the content to the server for receiving and storing a file in the selected content delivery and storage function module, and the requesting manner can be based on the manner of uploading a FTP file;
the content delivery and storage function module stores the content;
the content delivery and storage function module confirms the storage of the content file with the content preparation function module;
the content preparation function module notifies the content distribution and position control function module;
the content distribution and position control function module returns a confirmation message to the content preparation function module;
the content distribution and position control function module notifies the content delivery and storage function module; and
the content delivery and storage function module returns the confirmation message to the content distribution and position control function module.
